(19) Europäisches Patentamt
European Patent Office
Office européen des brevets

(11) **EP 4 160 756 A1**

(12) **EUROPEAN PATENT APPLICATION**
published in accordance with Art. 153(4) EPC

(43) Date of publication:
**05.04.2023 Bulletin 2023/14**

(21) Application number: **21891217.8**

(22) Date of filing: **12.11.2021**

(51) International Patent Classification (IPC):
***H01M 4/78*** (2006.01)

(52) Cooperative Patent Classification (CPC):
Y02E 60/10

(86) International application number:
**PCT/CN2021/130359**

(87) International publication number:
**WO 2022/100697 (19.05.2022 Gazette 2022/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.11.2020 CN 202011273374
30.07.2021 CN 202110873205**

(71) Applicant: **Contemporary Amperex Technology
Co., Limited
Ningde, Fujian 352100 (CN)**

(72) Inventors:
• **TANG, Huaichao
Ningde, Fujian 352100 (CN)**
• **WU, Kai
Ningde, Fujian 352100 (CN)**
• **LIANG, Chengdu
Ningde, Fujian 352100 (CN)**
• **LI, Wei
Ningde, Fujian 352100 (CN)**

(74) Representative: **Gong, Jinping
CocreateIP
Eggenfeldenerstraße 56
81929 München (DE)**

(54) **ELECTRODE SHEET, SECONDARY BATTERY, BATTERY MODULE, BATTERY PACK AND ELECTRIC DEVICE**

(57)    This application relates to an electrode plate, a secondary battery containing the electrode plate, a battery module, a battery pack, and an electric apparatus. Specifically, this application provides an electrode plate, which includes a current collector, a functional layer, and an active material layer. At least a portion of a surface of the current collector is provided with a plurality of protruding portions and a plurality of recessed portions, and a functional layer is disposed in at least a portion of the plurality of recessed portions, so that when a temperature is greater than or equal to 80°C, an effect of separating the current collector from an active material layer is generated, and a resistivity of the electrode plate is increased, further ensuring safety performance of a secondary battery. In addition, provision of the concave-convex current collector can alleviate a problem that the active material layer and the current collector cannot be in direct contact due to the functional layer at room temperature, and a relatively small resistance value can be obtained.

FIG. 1

## Description

### CROSS-REFERENCE TO RELATED APPLICATIONS

This application claims priorities to Chinese patent application No. 202011273374.2, filed on November 14, 2020 and entitled "SECONDARY BATTERY AND APPARATUS CONTAINING SAME", and Chinese patent application No. 202110873205.0, filed on July 30, 2021 and entitled "ELECTRODE PLATE, SECONDARY BATTERY CONTAINING SAME, BATTERY MODULE, BATTERY PACK, AND ELECTRIC APPARATUS", which are incorporated herein by reference in their entireties.

### TECHNICAL FIELD

This application pertains to the field of electrochemical technologies. More specifically, this application relates to an electrode plate, a secondary battery containing the electrode plate, a battery module, a battery pack, and an electric apparatus.

### BACKGROUND

Secondary batteries are widely applied due to their outstanding characteristics such as light weight, high energy density, no pollution, zero memory effect, and long service life. As people have increasingly high requirements for secondary battery energy storage technology, the energy density of the secondary batteries is also increasingly high. As a result, safety hazards have become particularly prominent. Taking a lithium-ion battery as an example, there are many factors that affect safety risks. In general, the factors mainly include mechanical abuse, electrical abuse, and thermal abuse. The main manifestation is that abnormal current or a side reaction occurs inside the battery caused by mechanical abuse and electrical abuse, resulting in abnormal internal temperature rise and eventually thermal runaway, explosion or even fire.

In view of this, it is necessary to provide an electrode plate that can alleviate the foregoing problems.

### SUMMARY

#### Technical problems

To alleviate the foregoing safety problems, many methods have been reported. A method for preparing a protective coating located between a current collector and an active material layer and composed of a material containing a positive temperature coefficient (PTC) has received extensive attention. When the PTC material is heated to around Curie temperature, a resistivity of the material increases in a step-like manner. Based on this characteristic, occurrence of abnormal current may be prevented, avoiding rapid release of heat. However, in a practical application, a room temperature internal resistance of a battery is in an $m\Omega$ level, and addition of the PTC material coating significantly increases an overall internal resistance of the battery, thereby seriously deteriorating battery capacity and power performance. Many patents (for example, referring to the following patents 99811515.0, 201320203851.7, 201410661206.9, 201510022749.0, 201611208300.4, 2016211863080.0, 201710241644.3, 201811297349.0, 201910442726.3, and 201820838120.2) have reported that the foregoing problems can be alleviated by adding a conductive agent (such as a carbon material); however, since a resistance value of a general conductive agent is not sensitive to temperature, a protective effect of the PTC material on a battery at high temperature is seriously damaged.

In view of the foregoing technical problems existing in the prior art, this application is intended to provide an electrode plate, a secondary battery containing the electrode plate, a battery module, a battery pack, and an electric apparatus. The electrode plate can make the secondary battery, the battery module, the battery pack, and the electric apparatus have good capacity and power performance at room temperature, and also have excellent safety performance at high temperature.

#### Technical solutions

To achieve the foregoing objective, a first aspect of this application provides an electrode plate, and the electrode plate includes: a current collector, where at least a portion of a surface of the current collector includes a plurality of protruding portions and a plurality of recessed portions; a functional layer, where the functional layer is disposed in at least a portion of the plurality of recessed portions; and an active material layer, where the active material layer covers, by means of contact with the current collector and the functional layer, the current collector and the functional layer. The functional layer includes at least one of a polymer material and a PTC material (a positive temperature coefficient material).

The functional layer is used to increase a resistivity of the electrode plate when a temperature is greater than or equal to 80°C. During use of the functional layer, as the temperature rises to a value greater than or equal to 80°C, the functional layer increases the resistivity of the electrode plate, thereby ensuring safety performance of a secondary battery. That the functional layer increases the resistivity of the electrode plate may include the following two cases: The functional layer expands or makes the current collector and the active material layer be out of contact when the temperature rises to a value greater than or equal to 80°C (for example, when the functional layer contains a polymer material). Alternatively, the resistivity of the functional layer increases significantly when the temperature rises to a value greater than or equal to 80°C (for example, when the functional layer includes a PTC material), thereby significantly reducing electrical connection between the current collector and the active material layer. Optionally, the functional layer significantly increases the resistivity of the electrode plate at 80°C-250°C. Optionally, the functional layer is used to significantly increase the resistivity of the electrode plate at 80°C-150°C.

In addition, provision of the concave-convex current collector can alleviate a problem that the active material layer cannot be in direct contact with the current collector due to use of the functional layer at room temperature, and also make a battery have a relatively small internal resistance value. In addition, provision of the concave-convex current collector can ensure that the battery has both high resistivity at high temperature and low resistivity at room temperature, and reduces an impact of the functional layer on battery capacity and power at room temperature on the premise of ensuring safety performance of the battery at high temperature.

In an optional embodiment according to the first aspect, the active material layer covers the protruding portions, without the functional layer covered, on the surface of the functional layer and the current collector. Optionally, at least a portion of the functional layer is not higher than the protruding portions of the current collector, that is, the functional layer partially or discontinuously covers the protruding portions, so that the protruding portions can be in direct contact with the active material layer, and the battery has a relatively small internal resistance value. A slurry of the functional layer may be applied to the current collector in a spraying or coating manner, and a spraying amount or coating amount may be changed in a wide range, as long as at least a portion of the functional layer is disposed in the recessed portions of the current collector and not higher than the protruding portions. In an optional embodiment, when the spraying manner is used, a spraying weight ranges from 0.094 $mg/cm^2$ to 0.376 $mg/cm^2$; and when the coating manner is used, the coating weight ranges from 0.507 $mg/cm^2$ to 2.428 $mg/cm^2$. In this specification, the spraying weight and coating weight are dry weights unless otherwise stated.

In an optional embodiment according to the first aspect, a surface roughness Ra of the surface of the current collector is $\geq$ 1 $\mu$m. Optionally, the surface roughness Ra of the surface of the current collector is 1.5 $\mu$m-50 $\mu$m, and optionally, 1.5 $\mu$m-30 $\mu$m or 1.5 $\mu$m-20 $\mu$m. Further optionally, the surface roughness Ra of the surface of the current collector is 1.5 $\mu$m-10 $\mu$m. Still further optionally, the surface roughness Ra of the surface of the current collector is 1.5 $\mu$m-6 $\mu$m or 1.5 $\mu$m-5 $\mu$m. When the surface roughness Ra of the surface of the current collector 11 is in the range of 1.5 $\mu$m-10 $\mu$m, especially in the range of 1.5 $\mu$m-6 $\mu$m, it is more favorable for direct contact between the protruding portions and the active material layer, and also helps significantly reduce electrical connection between the current collector and the active material layer when the temperature rises (at high temperature).

A main parameter of the surface roughness is an arithmetic mean deviation Ra of a contour, which refers to an arithmetic mean of an absolute value of a distance between each point on the measured contour line and a reference line within a specific sampling length range. A measurement and calculation process of Ra may be completed by an electric contour measuring instrument. The reference line herein is defined as the least-squares midline of the contour, and a sum of squares of contour offsets is the smallest within a sampling length.

In an optional embodiment according to the first aspect, the polymer material may include at least one of polyethylene, ethylene copolymer, polypropylene, polyolefin resin, polyvinylidene fluoride, polymethyl methacrylate, polystyrene, polyester resin, ethylene propylene rubber, cis-polybutadiene, polyamide, polyaniline, polyphenylene sulfide, copolymer of olefin monomer and acid anhydride monomer, or polycaprolactone, polylactide, polyvalerolactone and polyethylene oxide, polyethylene oxide, polypropylene oxide, and a blend of compounds of polytetramethylene oxide. Optionally, the polymer material includes polyethylene, polyvinylidene fluoride, or polymethyl methacrylate. The polymer material is in a form of particles, and a median particle size by volume is 0.1 $\mu$m-10 $\mu$m, and optionally, 0.1 $\mu$m-2 $\mu$m. A median particle size by volume of polyethylene may be set to 0.1 $\mu$m-10 $\mu$m according to needs of a user. Optionally, the median particle size by volume of polyethylene is set to 0.1 $\mu$m-2 $\mu$m. In addition, it is advantageous to set polyethylene in the form of particles, because the particles are prone to locate in the recessed portions of the current collector and not likely to cover the protruding portions of the current collector, so as to prevent the current collector from being isolated from the active material layer.

In an optional embodiment according to the first aspect, the PTC material may include at least one of a bismuth titanate modified material (for example, sodium bismuth titanate), barium titanate, a barium titanate modified material, vanadium oxide, and a vanadium oxide modified material; and optionally, the PTC material includes barium titanate. The PTC material is in a form of particles, and a median particle size by volume is 0.1 $\mu$m-10 $\mu$m, and optionally, 0.1 $\mu$m-2 $\mu$m. Barium titanate and a barium titanate-based complex/mixture are typical materials. When the material is heated to around Curie temperature (about 120°C), a resistivity of the material increases in a step-like manner. Based on this characteristic, frequency of occurrence of abnormal current may be significantly reduced, avoiding rapid release of heat.

In an optional embodiment according to the first aspect, the functional layer may include a conductive material. Optionally, the conductive material includes at least one of a conductive metal material, a conductive metal oxide material, a conductive metal carbide material, a conductive polymer material, and a conductive carbon-based material. Optionally, the conductive material includes one or more of conductive metal powder or metal oxide powder, tungsten carbide powder, carbon black, graphite fiber, carbon nanotube, graphene, and graphite sheet. This helps improve battery capacity and power performance.

In an optional embodiment according to the first aspect, the electrode plate is at least one of a positive electrode plate and a negative electrode plate.

In an optional embodiment according to the first aspect, the active material layer includes at least one of lithium transition metal oxide, olivine-structured lithium-containing phosphate, and respective modified compounds thereof. The lithium transition metal oxide includes one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. The olivine-structured lithium-containing phosphate includes one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and modified compounds thereof. This helps improve battery capacity and power performance.

A second aspect of this application provides a secondary battery, including the electrode plate according to the first aspect of this application.

A third aspect of this application provides a battery module, including the secondary battery according to the second aspect of this application.

A fourth aspect of this application provides a battery pack, including the battery module according to the third aspect of this application.

A fifth aspect of this application provides an electric apparatus, including at least one of the secondary battery according to the second aspect of this application, the battery module according to the third aspect of this application, or the battery pack according to the fourth aspect of this application.

Since the secondary battery, the battery module, the battery pack, and the electric apparatus provided in this application include the foregoing electrode plate, they have good battery capacity and power performance at room temperature, and also have excellent safety performance at high temperature.

**BRIEF DESCRIPTION OF DRAWINGS**

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.

FIG. 1 is a schematic diagram of a whole structure of an electrode plate in an embodiment according to this application;
FIG. 2 is a schematic structural diagram of a current collector of an electrode plate according to this application;
FIG. 3 is scanning electron microscope (SEM) images of current collectors on which before and after the functional layer is coated in Example 3 and Comparative Example 2 according to this application;
FIG. 4 is a schematic diagram of an embodiment of a secondary battery according to this application;
FIG. 5 is an exploded view of the secondary battery according to the embodiment of this application in FIG. 4;
FIG. 6 is a schematic diagram of a battery module according to an embodiment of this application;
FIG. 7 is a schematic diagram of a battery pack according to an embodiment of this application;
FIG. 8 is an exploded view of the battery pack according to the embodiment of this application in FIG. 7;
FIG. 9 is a schematic diagram of an electric apparatus using a secondary battery as a power source according to an embodiment of this application; and
FIG. 10 is a schematic diagram of a variation relationship of a test voltage with time according to this application.

Reference signs are as follows:

1. battery pack; 2. upper box body; 3. lower box body; 4. battery module; 5. secondary battery; 51. housing; 52. electrode assembly; 53. top cover assembly; 10. electrode plate; 11. current collector; 111. protruding portion; 113. recessed portion; 13. functional layer; and 15. active material layer.

**DESCRIPTION OF EMBODIMENTS**

The following further describes this application with reference to embodiments. It should be understood that these specific embodiments are merely intended to illustrate this application but not to limit the scope of this application.

For brevity, this specification specifically discloses only some numerical ranges. However, any lower limit may be combined with any upper limit to form a range not expressly recorded in this specification; any lower limit may be combined with any other lower limit to form a range not expressly recorded in this specification; and any upper limit may be combined with any other upper limit to form a range not expressly recorded in this specification. In addition, each individually disclosed point or single numerical value, as a lower limit or an upper limit, may be combined with any other point or single numerical value or combined with another lower limit or upper limit to form a range not expressly recorded in this specification.

In the descriptions of this specification, it should be noted that "more than" or "less than" is inclusive of the present number and that "more" in "one or more" means two or more than two, unless otherwise specified.

Unless otherwise specified, terms used in this application have well-known meanings generally understood by persons skilled in the art. Unless otherwise specified, numerical values of parameters mentioned in this application may be measured by using various measurement methods commonly used in the art (for example, testing may be performed according to a method provided in an embodiment of this application).

Electrode plate and secondary battery

A first aspect of this application provides an electrode plate 10. The electrode plate 10 is included in the secondary battery 5 provided in a second aspect of this application.

[Electrode plate 10]

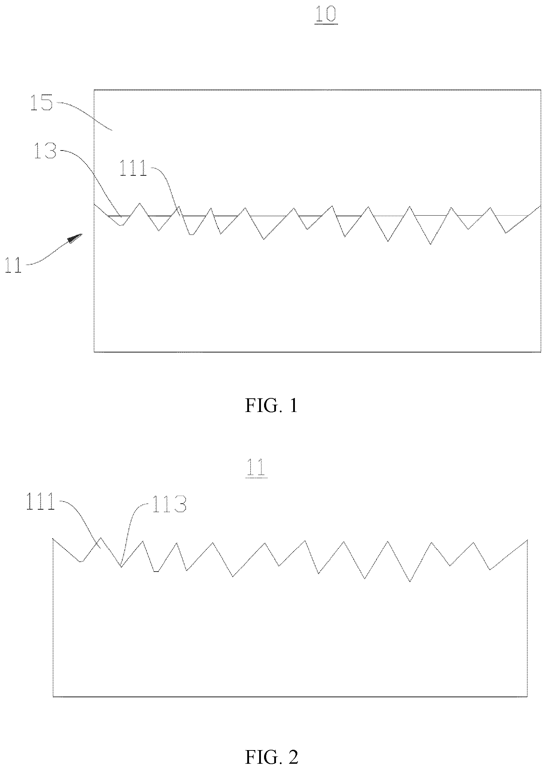

Referring to FIG. 1 and FIG. 2, the secondary battery 5 of this application includes an electrode plate 10, and the electrode plate 10 includes: a current collector 11, where at least a portion of a surface of the current collector includes a plurality of protruding portions 111 and a plurality of recessed portions 113 (optionally, an entire surface of the current collector includes a plurality of protruding portions 111 and a plurality of recessed portions 113); a functional layer 13, where the functional layer 13 is disposed in at least a portion of the plurality of recessed portions 111 (optionally, the functional layer 13 is disposed in all of the plurality of recessed portions 111); and an active material layer 15, where the active material layer 15 covers, by means of contact with the current collector 11 and the functional layer 13, the current collector 11 and the functional layer 13. The functional layer 13 includes at least one of a polymer material and a PTC material (a positive temperature coefficient material). That the active material layer 15 covers, by means of contact with the current collector 11 and the functional layer 13, the current collector 11 and the functional layer 13 includes, for example, the following cases: Referring to FIG. 1 and FIG. 2, the functional layer 13 is disposed in the recessed portions 113 on the surface of the current collector 11, and the active material layer 15 covers the protruding portions 111, without the functional layer 13 covered, on the surface of the functional layer 13 and the current collector 11. Thereby, the current collector 11, the functional layer 13, and the active material layer 15 are integrated with each other.

It can be understood that the current collector 11 includes two back-to-back surfaces in a thickness direction of the current collector 11, and the protruding portions 111 and the functional layer 13 may be disposed on either or both of the two back-to-back surfaces of the current collector 11.

In addition, a material of the plurality of protruding portions 111 may be the same as that of the current collector 11, or may not be the same. In this case, the plurality of protruding portions 111 may be formed through processing such as sandblasting and plating on the current collector 11 (for example, the current collector 11 having the protruding portions 111 thereon is formed in a manner such as sandblasting, and in this case the material of the protruding portions 111 is the same as that of the current collector 11), or the plurality of protruding portions 111 may be additionally disposed on the current collector 11 (for example, protruding portions are formed in a manner of sputtering, and in this case the material of the protruding portions 111 may be not the same as the material of the current collector 11). When the plurality of protruding portions 111 are additionally disposed on the current collector 11 (for example, when the material of the protruding portions 111 is not the same as that of the current collector 11), the plurality of protruding portions 111 are regarded as a portion of the current collector 11. That is, that "the active material layer 15 covers, by means of contact with the current collector 11 and the functional layer 13, the current collector 11 and the functional layer 13" includes the following cases: The active material layer 15 covers, by means of contact with the plurality of protruding portions 111 serving as a portion of the current collector 11 and the functional layer 13, the current collector 11 (the plurality of protruding portions 111) and the functional layer 13.

The applicant has found through research that, in a case that at least a portion of a surface of the current collector includes a plurality of protruding portions 111 and a plurality of recessed portions 113, the functional layer 13 is disposed in at least a portion of the plurality of recessed portions 111, and the active material layer 15 covers, by means of contact with the current collector 11 and the functional layer 13, the current collector 11 and the functional layer 13, during use of the secondary battery 5, when a temperature rises to a value greater than or equal to 80°C, the functional layer 13 physically blocks electrical connection between the current collector 11 and the active material layer 15 through expansion or significantly reduces electrical connection between the current collector 11 and the active material layer 15 through characteristics of the PTC material, thereby ensuring safety performance of the secondary battery 5. In addition, provision of the concave-convex current collector 11 can alleviate a problem that the active material layer 15 and the current collector 11 cannot be in direct contact due to use of the functional layer 13 at room temperature, so that the electrode plate 10 has a relatively small internal resistance value. This enables the secondary battery to have both high resistivity at high temperature and low resistivity at room temperature, and reduces an impact on battery capacity and power at room temperature on the premise of ensuring safety performance of the battery at high temperature.

The inventors of this application have found through intensive study that on the basis that the functional layer 13 and the current collector 11 of the secondary battery 5 in this application satisfy the foregoing design conditions, if one or more of the following design conditions are also optionally satisfied, performance of the secondary battery 5 can be further improved.

In some exemplary embodiments, the functional layer 13 is used to significantly increase a resistivity of the electrode plate 10 at 80°C-250°C. Optionally, the functional layer 13 is used to significantly increase the resistivity of the electrode plate 10 at 80°C-150°C. The foregoing temperature range is more suitable for a thermal runaway environment of the secondary battery. Therefore, when the functional layer 13 significantly increases the resistivity of the electrode plate 10 within the foregoing temperature range, excellent safety performance can be effectively imparted to the secondary battery at high temperature.

In some exemplary embodiments, the functional layer 13 includes at least one of a polymer material and a PTC material (a positive temperature coefficient material).

In an example, the polymer material may include one or more of polyethylene, ethylene copolymer, polypropylene, polyolefin resin, polyvinylidene fluoride, polymethyl methacrylate, polystyrene, polyester resin, ethylene propylene rubber, cis-polybutadiene, polyamide, polyaniline, polyphenylene sulfide, copolymer of olefin monomer and acid anhydride monomer, or polycaprolactone, polylactide, polyvalerolactone and polyethylene oxide, polyethylene oxide, polypropylene oxide, and a blend of compounds of polytetramethylene oxide. Optionally, the polymer material includes polyethylene, polyvinylidene fluoride, or polymethyl methacrylate. The polymer material is in a form of particles, and a median particle size by volume is 0.1 $\mu$m-10 $\mu$m, and optionally, 0.1 $\mu$m-2 $\mu$m. A median particle size by volume of polyethylene may be set to 0.1 $\mu$m-10 $\mu$m according to needs of a user. Optionally, the median particle size by volume of polyethylene is set to 0.1 $\mu$m-2 $\mu$m. Polyethylene is set in the form of particles. Because particles are easily located in the recessed portions 113 of the current collector 11, it is not easy to cover the protruding portions 111 of the current collector 11, preventing the current collector 11 from being isolated from the active material.

A principle that the polymer material can improve a safety performance of the secondary battery 5 is that: as temperature increases, the polymer material has a tendency to expand, and as the polymer material expands, contact between the protruding portions 111 and the active material layer 15 becomes worse. Furthermore, as described above, when the temperature rises, the protruding portions 111 tend to shrink and detach from the active material layer 15. Thereby, abnormal current can be blocked, and safety of the battery can be improved.

In an example, the PTC material includes at least one of a bismuth titanate modified material, barium titanate, a barium titanate modified material, vanadium oxide, and a vanadium oxide modified material. Specifically, the PTC material includes one or more of barium titanate and a barium titanate-based complex/mixture doped with another element or compounded with another PTC material. The PTC material is in a form of particles, and a median particle size by volume is 0.1 $\mu$m-10 $\mu$m, and optionally, 0.1 $\mu$m-2 $\mu$m. Barium titanate and the barium titanate-based complex/mixture are typical materials. When a temperature of the material rises to around Curie temperature (about 120°C) of the material, a resistivity of the material increases in a step-like manner. Based on this characteristic, frequency of occurrence of abnormal current may be significantly reduced, avoiding rapid release of heat.

In some exemplary embodiments, the functional layer 13 includes a conductive material. In an example, the conductive material may include one or more of conductive metal powder or metal oxide powder, tungsten carbide powder, carbon black, graphite fiber, carbon nanotube, graphene, and graphite sheet. This helps improve battery capacity and power performance.

In some optional embodiments, the protruding portions 111 may be in a shape of a pointed cone, a hole, or a synapse. No matter what shape the protruding portions 111 are in, optionally, a surface roughness Ra of the surface of the current collector 11 is $\geq 1$ $\mu$m. Optionally, the surface roughness Ra is 1.5 $\mu$m-50 $\mu$m, and optionally, 1.5 $\mu$m -30 $\mu$m or 1.5 $\mu$m-20 $\mu$m. Further optionally, the surface roughness Ra of the surface of the current collector is 1.5 $\mu$m-10 $\mu$m. Still further optionally, the surface roughness Ra of the surface of the current collector is 1.5 $\mu$m-6 $\mu$m or 1.5 $\mu$m-5 $\mu$m.

It should be noted that the surface roughness related in this application refers to unevenness of small pitches and minute peaks and valleys that a machined surface has. The surface roughness of this application adopts the arithmetic mean deviation Ra of the contour specified in GB/T1031- 2009.

When surface roughness of the current collector 11 is measured, a test sample may be taken from a battery, or a surface of a fabricated and exposed current collector 11 may be directly measured.

When the test sample is taken from the battery, in an example, the sample may be obtained by performing the following steps: disassembling the battery, taking out a segment of a cathode electrode plate (the cathode electrode is used as an example), and measuring a resistance of the electrode plate. At room temperature, a value of the resistance is higher than that of a pure current collector 11. At high temperature (such as 100°C-130°C), the value of the resistance is more than 1 times higher than that at room temperature. A scanning electron microscope (SEM) is used to analyze mechanical cross-sectional topography of the selected electrode plate. It can be seen that there are protruding portions 111, a functional layer 13, and an active material layer 15.

After sampling, the surface roughness of the current collector 11 may be measured. In an example, measurement may be made by performing the following steps:

soaking the electrode plate with DEC (diethyl carbonate) or dimethyl carbonate (DMC), erasing the active material layer 15 on the surface of the electrode plate, then removing the functional layer 13 by heating or beating, and performing roughness analysis by using a commercial surface roughness tester to obtain that the roughness Ra is > 0.5 $\mu$m.

In some optional embodiments, the current collector 11 may be a metal foil or a composite current collector 11. For example, a copper foil and an aluminum foil may be used. The composite current collector 11 may be formed by forming a metal material (copper, copper alloy, nickel, nickel alloy, titanium, titanium alloy, silver, silver alloy, or the like) on a polymer matrix.

In some optional embodiments, a thickness of a substrate of the current collector 11 of this application is controlled to be about 6 microns.

[Active material layer 15]

In the secondary battery 5 of this application, the electrode plate 10 includes an active material layer 15. The active material layer 15 covers, by means of contact with the current collector 11 and the functional layer 13, the current collector 11 and the functional layer 13. The active material layer 15 is not limited to any specific type in this application, and may be any well-known active material. It should be noted that the active material is a material that participates inflow-forming reaction in positive and negative electrodes of the battery. During use of the secondary battery, when temperature rises, the protruding portions 111 tend to shrink due to an increased surface area, and then detach from the active material layer 15, thereby blocking electrical connection between the current collector 11 and the active material layer 15, and further ensuring safety performance of the secondary battery 5.

In the secondary battery 5 of this application, the electrode plate 10 may be at least one of a positive electrode plate and a negative electrode plate. The following describes the positive electrode plate 10 as an example.

[Positive electrode plate]

In a case that at least a portion of a surface of the current collector 11 of a positive electrode plate includes a plurality of protruding portions 111 and a plurality of recessed portions 113, the functional layer 13 is disposed in at least a portion of the plurality of protruding portions 111, and the active material layer 15 of the positive electrode plate covers, by means of contact with the current collector 11 of the positive electrode plate and the functional layer 13, the current collector 11 of the positive electrode plate and the functional layer 13, during use of the secondary battery 5, when a temperature rises to a value greater than or equal to 80°C, the functional layer 13 increases resistivity of the positive electrode plate to electrically isolate the current collector 11 from the active material layer 15, thereby ensuring safety performance of the secondary battery 5. In addition, in the positive electrode plate, provision of the concave-convex current collector 11 can alleviate a problem that the active material layer 15 of the positive electrode plate and the current collector 11 of the positive electrode plate cannot be in direct contact due to use of the functional layer 13 at room temperature, and make the positive electrode plate have a relatively small internal resistance value. This ensures that the battery has both high resistivity at high temperature and low resistivity at room temperature, and reduces an impact on battery capacity and power at room temperature on the premise of ensuring safety performance of the battery at high temperature.

In the secondary battery 5 of this application, the active material layer 15 of the positive electrode plate may be a well-known active material used for the positive electrode plate of the secondary battery 5 in the art. For example, the active material of the positive electrode plate may include at least one of lithium transition metal oxide, olivine-structured lithium-containing phosphate, and respective modified compounds thereof. Examples of the lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include but are not limited to one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and modified compounds thereof. This application is not limited to these materials, and other conventionally well-known materials that can be used as an active material of the positive electrode plate for the secondary battery 5 may also be used.

In some optional embodiments, to further improve energy density of batteries, the active material of the positive electrode plate may include one or more of lithium transition metal oxides shown in formula 1 and modified compounds thereof:

$$Li_aNi_bCo_cM_dO_eA_f \qquad \text{formula 1.}$$

In formula 1, $0.8 \leq a \leq 1.2, 0 \leq b < 1, 0 \leq c \leq 1, 0 \leq d \leq 1, 1 \leq e \leq 2$, and $0 \leq f \leq 1$, M is selected from one or more of Mn, Al, Zr, Zn, Cu, Cr, Mg, Fe, V, Ti, and B, and A is selected from one or more of N, F, S, and Cl.

In this application, the modified compounds of the foregoing materials may be one or more compounds obtained through doping modification and surface coating modification to the materials.

[Electrolyte]

The electrolyte conducts ions between the positive electrode plate and the negative electrode plate. The electrolyte is not specifically limited to any particular type in this application, and may be selected based on a need. For example, the electrolyte may be selected from at least one of a solid electrolyte and a liquid electrolyte (namely, an electrolyte solution).

In some embodiments, the electrolyte is a electrolyte solution. The electrolyte solution includes an electrolytic salt and a solvent. In some embodiments, the electrolytic salt may be one or more of $LiPF_6$ (lithium hexafluorophosphate), $LiBF_4$ (lithium tetrafluoroborate), $LiClO_4$ (lithium perchlorate), $LiAsF_6$ (lithium hexafluoroborate), LiFSI (lithium bis(fluorosulfonyl)imide), LiTFSI (lithium bistrifluoromethanesulfonimide), LiTFS (lithium trifluoromethanesulfonat), LiDFOB (lithium difluorooxalatoborate), LiBOB (lithium bisoxalatoborate), $LiPO_2F_2$ (lithium difluorophosphate), LiDFOP (lithium difluorophosphate), and LiTFOP (lithium tetrafluoro oxalate phosphate).

In some embodiments, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methylmethyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), tetramethylene sulfone (SF), methyl sulfone (MSM), ethyl methyl sulfone (EMS), and diethyl sulfone (ESE).

In some embodiments, the electrolyte solution further optionally includes an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature performance of the battery.

[Separator]

A secondary battery 5 using an electrolyte solution and some secondary batteries 5 using a solid electrolyte further include a separator. The separator is disposed between the positive electrode plate and the negative electrode plate to provide separation. The separator is not limited to any specific type in this application, and may be any well-known porous separator with good chemical stability and mechanical stability.

In some embodiments, a material of the separator may be selected from one or more of glass fiber, non-woven fabric, polyethylene, polypropylene, and polyvinylidene fluoride. The separator may be a single-layer thin film or a multilayer composite thin film. When the separator is a multilayer composite thin film, each layer may be made of a same material or different materials.

In some embodiments, a positive electrode plate, a negative electrode plate, and a separator may be made into an electrode assembly through winding or lamination.

In some embodiments, the secondary battery 5 may include an outer package. The outer package is used for packaging the electrode assembly and the electrolyte.

In some embodiments, the outer package of the secondary battery 5 may be a hard shell, for example, a hard plastic shell, an aluminum shell, or a steel shell. The outer package of the secondary battery 5 may alternatively be a soft package, for example, a soft bag. A material of the soft package may be plastic, for example, one or more of polypropylene (PP), polybutylene terephthalate (PBT), polybutylene succinate (PBS), and the like.

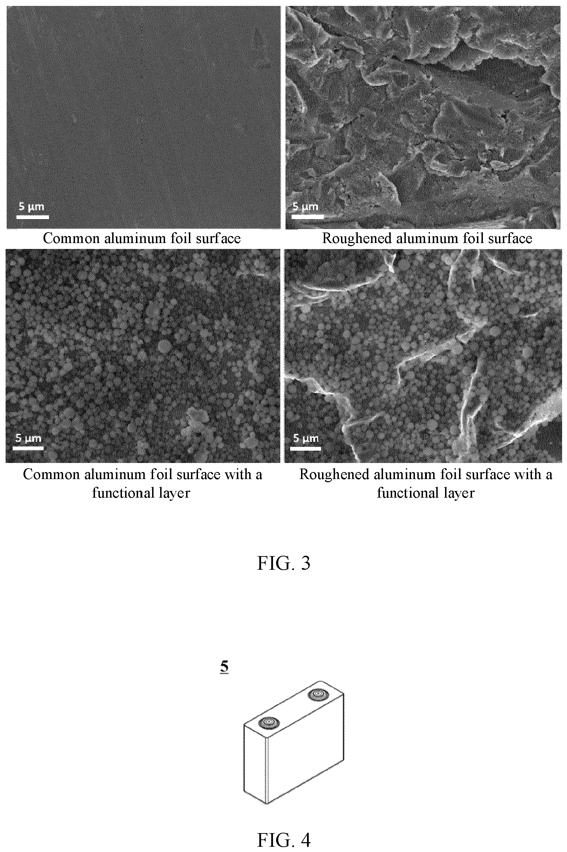

The secondary battery 5 is not limited to a particular shape in this application, and may be cylindrical, rectangular, or of any other shapes. For example, FIG. 4 shows a secondary battery 5 of a rectangular structure as an example.

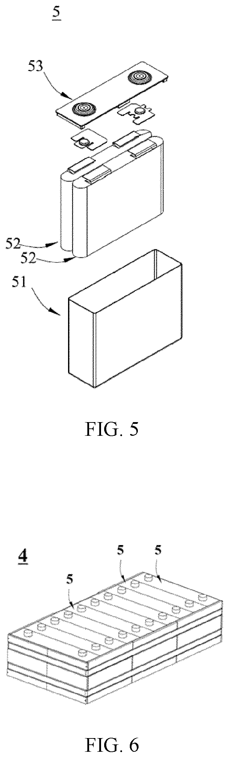

Referring to FIG. 4 and FIG. 5, a second aspect of this application provides a secondary battery. Referring to FIG. 5, the outer package may include a housing 51 and a top cover assembly 53, for example, a cover plate. The housing 51 may include a base plate and a side plate connected onto the base plate, and the base plate and the side plate enclose an accommodating cavity. The housing 51 has an opening communicating with the accommodating cavity, and the top cover assembly 53, for example, a cover plate, can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

Battery module

Referring to FIG. 6, a third aspect of this application provides a battery module. Referring to FIG. 6, in a battery module 4, a plurality of secondary batteries 5 may be sequentially arranged along a length direction of the battery module 4. Certainly, the secondary batteries 5 may alternatively be arranged in any other manner. Further, the plurality of secondary batteries 5 may be fastened by using fasteners.

Optionally, the battery module 4 may further include a housing with an accommodating space, and the plurality of secondary batteries 5 are accommodated in the accommodating space.

In some embodiments, the secondary batteries 5 may be assembled into a battery module, and a plurality of secondary batteries 5 may be included in the battery module. A specific quantity of the secondary batteries 5 may be adjusted based on use and capacity of the battery module.

Battery pack

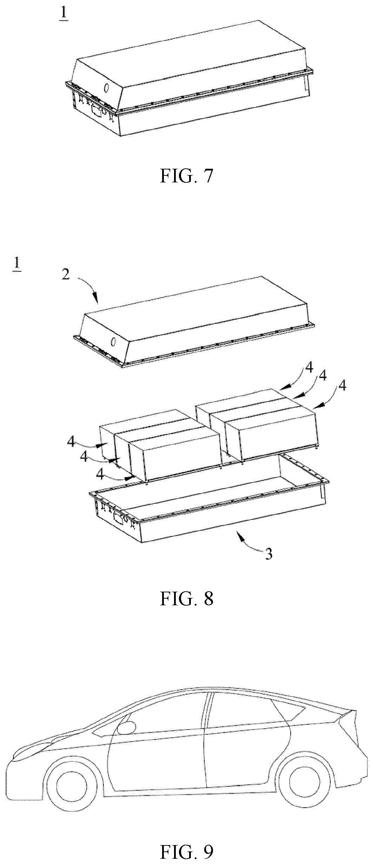

Referring to FIG. 7 and FIG. 8, a fourth aspect of this application provides a battery pack. Referring to FIG. 7 and FIG. 8, the battery pack 1 may include batteries connected in series and parallel, a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

Electric apparatus

Referring to FIG. 9, a fifth aspect of this application provides an electric apparatus. The electric apparatus includes the secondary battery 5 in the second aspect of this application, and the secondary battery 5 includes the electrode plate 10 in the first aspect of this application. The secondary battery 5 may be used as a power source of the electric apparatus or an energy storage unit of the electric apparatus. The electric apparatus in this application uses the secondary battery 5 provided in this application, and therefore has at least the same advantages as the secondary battery 5 in this application.

The electric apparatus may be but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

The secondary battery 5 or the battery module may be selected for the electric apparatus based on requirements for using the electric apparatus.

FIG. 9 shows an electric apparatus as an example. The electric apparatus is a battery electric vehicle, a hybrid electric vehicle, a plug-in hybrid electric vehicle, or the like. To satisfy a requirement of the electric apparatus for high power and high energy density of the secondary battery 5, a battery pack or a battery module may be used.

In another example, the electric apparatus may be a mobile phone, a tablet computer, a notebook computer, or the like. The electric apparatus is usually required to be light and thin, and the secondary battery 5 may be used as a power source.

Since the electric apparatus provided in this application includes the foregoing secondary battery 5, the electrical apparatus also has good battery capacity and power performance at room temperature, and has excellent safety performance at high temperature.

The following further describes beneficial effects of this application with reference to embodiments.

**Examples**

To make the invention objectives, technical solutions, and beneficial technical effects of this application clearer, this application is further described below in detail with reference to examples. However, it should be understood that the examples of this application are merely intended to explain this application, but not to limit this application, and the examples of this application are not limited to the examples given in this specification. In examples in which specific experimental conditions or operating conditions are not specified, preparation is performed according to conventional conditions or according to conditions recommended by a material supplier.

[Preparation of secondary battery]

Example 1

1. Preparation of positive electrode plate

(1) Material: A current collector 11 was made of 60 micron aluminum foil.
(2) Surface pretreatment: including: (i) ethanol, chloroform or other solvents was used to decontaminate the surface of the aluminum foil; and (ii) diluted hydrochloric acid was used to wash off surface oxide of the aluminum foil.
(3) Sandblasting method: Sandblasting particles with an average particle size of 200 meshes were selected to roughen the aluminum foil with a pressure maintained at 0.5 MPa to 0.7 MPa and a treatment time was 3s-5s, to obtain protruding portions 111 and recessed portions 113 of the current collector 11.
(4) Cleaning and drying: The existing cleaning and drying process after sandblasting of aluminum foil was adopted. Details are not repeated in this application.
(5) Preparation of functional layer 13: Polyethylene (PE) microspheres (with a median particle size by volume $D_v50$ of about 1 micron) were added to ethanol in a proportion of 10 wt%, and stirred and mixed well to obtain a slurry of the functional layer 13. This slurry was later sprayed on an uneven surface of the current collector 11, so that the functional layer 13 was disposed in the recessed portions 113 and not higher than the protruding portions 111, and a spraying weight was 0.094 mg/cm$^2$.
(6) Preparation of active material layer 15: Polyvinylidene fluoride (PVDF), acetylene black, and a positive active material (such as $LiNi_{0.6}Co_{0.2}Mn_{0.2}O_2$) were dissolved in N-methylpyrrolidone at a mass ratio of 2:3:95, and after being moderately slurried, the mixture was coated on the current collector 11 and the functional layer 13 with a coating weight of 0.01262 g/cm$^2$, followed by drying, to obtain the active material layer 15. Thus, the positive electrode plate was obtained.

2. Preparation of negative electrode plate

Polyvinylidene fluoride (PVDF), conductive carbon, and a negative active material (such as artificial graphite, theoretical discharge capacity of 350 mAh/g) at a mass ratio of 2:3:95 were mixed in deionized water, and after being moderately slurried, the mixture was coated on a copper foil with a coating weight of 0.0082 g/cm$^2$, followed by drying, to obtain a shaped positive electrode plate.

3. Electrolyte

The lithium salt was 1M $LiPF_6$, and a ratio of the solvent EC:EMC was 1:1.

4. Preparation of secondary battery 5

The positive electrode plate, the separator (polypropylene separator), and the negative electrode plate were sequentially stacked so that the separator was located between the positive electrode plate and the negative electrode plate for separation. Then, the resulting stack was wound (or laminated) to form an electrode assembly; the electrode assembly was dried and placed into an outer package which was filled with electrolyte solution, followed by processes such as vacuum packaging, standing, formation, and shaping, so that the secondary battery 5 was obtained.

In this application, $D_v50$ of PE microspheres has a well-known meaning in the art, and can be measured by using a method known in the art. For example, a test is directly carried out with reference to the standard GB/T 19077.1-2016 by using a laser diffraction particle size distribution measuring instrument (for example, Malvern Mastersizer 3000 laser particle size analyzer). $D_v50$ is a corresponding particle size obtained when a cumulative volume percentage of material particles or power reaches 50%.

Example 2

A difference between this example and Example 1 was that the aluminum foil was roughened by using sandblasting particles with a particle size of 150 meshes.

Example 3

A difference between this example and Example 1 was that the aluminum foil was roughened by using sandblasting particles with a particle size of 120 meshes.

Example 4

A difference between this example and Example 1 was that the aluminum foil was roughened by using sandblasting particles with a particle size of 100 meshes.

Example 5

A difference between this example and Example 1 was that the aluminum foil was roughened by using sandblasting particles with a particle size of 80 meshes.

Example 6

A difference between this example and Example 1 was that the aluminum foil was roughened by using sandblasting particles with a particle size of 50 meshes.

Example 7

A difference between this example and Example 1 was that the aluminum foil was roughened by using sandblasting particles with a particle size of 30 meshes.

Example 8

A difference between this example and Example 1 was that the aluminum foil was roughened by using sandblasting particles with a particle size of 20 meshes.

Example 9

This example had the same steps as Example 3 except that the step of preparing the functional layer 13 was different from that of Example 3. To save space, this example only describes in detail the parts different from those in Example 1, and the same parts are not repeated.
Barium titanate ceramic particles were mixed into alcohol solution, stirred for 1 hour, and mixed uniformly, to obtain a slurry of the functional layer 13. The slurry was later applied, by using a commercial coating wire rod, on the recessed portions 113 above an uneven layer of the current collector 11 and not higher than the protruding portions 111 with a coating weight of 0.0012 g/cm$^2$. The functional layer 13 was obtained after the slurry was dried, so that the functional layer 13 was disposed in the recessed portions 113.

Comparative Example 1

This comparative example had the same steps as Example 3 except that the used aluminum foil was an ordinary aluminum foil without roughening treatment, and no functional layer was prepared thereon.

Comparative Example 2

This comparative example had the same steps as Example 3 except that the used aluminum foil was an ordinary aluminum foil without roughening treatment.
The following Table 1 lists sandblasting particle sizes (mesh) and main components of the functional layers 13 in the foregoing examples and comparative examples.

Table 1 Sandblasting particle size (mesh) and main components of functional layer 13

| Example | Sandblasting particle size (mesh) | Main components of functional layer 13 |
|---|---|---|
| Example 1 | 200 | Polyethylene (PE) microsphere |
| Example 2 | 150 | Polyethylene (PE) microsphere |
| Example 3 | 120 | Polyethylene (PE) microsphere |
| Example 4 | 100 | Polyethylene (PE) microsphere |
| Example 5 | 80 | Polyethylene (PE) microsphere |
| Example 6 | 50 | Polyethylene (PE) microsphere |
| Example 7 | 30 | Polyethylene (PE) microsphere |
| Example 8 | 20 | Polyethylene (PE) microsphere |
| Example 9 | 120 | Barium titanate ceramic particle |
| Comparative Example 1 | N/A | N/A |
| Comparative Example 2 | N/A | Polyethylene (PE) microsphere |

[Test of positive electrode plate and battery]

Test of surface roughness Ra of current collector

For the surface roughness of this application, a DX-100C electric contour measuring instrument was used to measure the surface roughness Ra of the current collector according to regulations in GB/T1031-2009.

Test of positive electrode plate resistance

At room temperature, a commercially available conventional commercial diaphragm resistance meter was used for test. The measured electrode plate was placed in the center of upper and lower test copper columns (with a cross-section of 154.0 $mm^2$) to obtain a resistance of the measured electrode plate.

The following Table 2 lists the surface roughness Ra of the current collectors 11 and positive electrode plate resistances after sandblasting in the foregoing examples and comparative examples.

**Table 2 Surface roughness Ra of current collector 11 and electrode plate resistance**

| Example | Surface roughness of current collector 11 Ra ($\mu$m) | Electrode plate resistance ($\Omega$) |
|---|---|---|
| Example 1 | 1.5 | 0.124 |
| Example 2 | 1.9 | 0.130 |
| Example 3 | 2.1 | 0.105 |
| Example 4 | 2.2 | 0.126 |
| Example 5 | 2.5 | 0.103 |
| Example 6 | 3.1 | 0.114 |
| Example 7 | 3.8 | 0.138 |
| Example 8 | 4.6 | 0.120 |
| Example 9 | 2.1 | 0.174 |
| Comparative Example 1 | < 0.3 | 0.101 |
| Comparative Example 2 | < 0.3 | 0.187 |

Morphology observation of positive electrode plate

Scanning electron microscope (COXEM electron microscope) was used to observe morphology of the current collector on which before and after the functional layer is coated in Example 3 and Comparative Example 2 according to this application. The observation results are shown in the FIG. 3.

Battery assembly, test process and results

At room temperature, button batteries with a specification of CR2025 in Examples 1 to 9 were prepared respectively by using the process of Example 1. After regular formation, charge was adjusted to ~50% SOC (about 50% SOC).

At room temperature, a button battery with a specification of CR2025 in Comparative Example 2 was prepared by using the process of Example 1. After regular formation, charge was adjusted to ~50% SOC (about 50% SOC).

The batteries in the examples and comparative examples were maintained at temperatures of 25°C, 50°C, 80°C, 100°C, and 110°C for 5 minutes, respectively, and then charging resistances $R_{\text{charging for 0.1 seconds}}$ for 0.1 seconds were measured, respectively.

The calculation formula is as follows:

$$R_{\text{charging for 0.1 seconds}} = \frac{U_1 - U_2}{I_1}$$

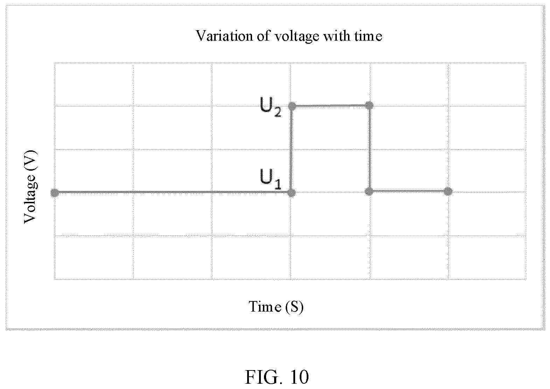

$U_1$ and $U_2$ are voltages obtained before and after current is turned on, respectively. For details, refer to a case in which voltage of the battery changes with time during measurement in FIG. 10.

A resistance change rate (lift-to-resistance ratio) of the electrode plate was obtained according to a ratio of the charging resistances $R_{\text{charging for 0.1 seconds}}$ of the battery at each temperature and 25°C.

**Table 3 Resistance change rate of $R_{\text{charging for 0.1 seconds}}$ of battery at different temperatures**

**(unit: %, relative to 25°C)**

| Temperature / Resistance change rate / Example | 25°C | 50°C | 80°C | 100°C | 110°C |
|---|---|---|---|---|---|
| Example 1 | 100 | 62 | 135 | 285 | 509 |
| Example 2 | 100 | 122 | 88 | 245 | 478 |
| Example 3 | 100 | 35 | 65 | 379 | 805 |
| Example 4 | 100 | 85 | 166 | 302 | 743 |
| Example 5 | 100 | 90 | 138 | 257 | 582 |
| Example 6 | 100 | 87 | 63 | 344 | 653 |
| Example 7 | 100 | 76 | 117 | 278 | 396 |
| Example 8 | 100 | 91 | 108 | 126 | 268 |
| Example 9 | 100 | 83 | 102 | 115 | 132 |
| Comparative Example 1 | 100 | 33 | 26 | 32 | 74 |
| Comparative Example 2 | 100 | 76 | 83 | 213 | 758 |

By comparing Examples 1 to 8 and Comparative Example 1 in Table 2, it can be seen that, when the surface roughness Ra of the current collector 11 was within the scope of the present invention, even if the current collector 11 was coated with a functional layer (polyethylene (PE) microspheres), the electrode plate resistances in Example 1 to Example 8 were not significantly higher than that in Comparative Example 1 (in fact, the electrode plate resistances were substantially equivalent to the electrode plate resistance in Comparative Example 1). Therefore, in this application, recessed portions and protruding portions are disposed on the current collector, and a problem that the active material layer and the current collector cannot be in direct contact due to use of the functional layer at room temperature is alleviated, so that the electrode plate has a relatively small internal resistance value. Therefore, the secondary battery using the foregoing electrode plate has good battery capacity and power performance at room temperature.

By comparing Example 9 and Comparative Example 2 in Table 2, it can be seen that, for a barium titanate electrode plate prepared by using the current collector with recessed portions and protruding portions disposed on the surface, an electrode plate resistance can still be reduced.

By comparing Examples 1 to 8 and Comparative Example 1 in Table 3, it can be seen that, when the surface roughness Ra of the current collector 11 was within the scope of the present invention, because a functional layer (polyethylene (PE) microspheres) was disposed in the recessed portions on the surface of the current collector, lift-to-drag ratios of the electrode plate resistances in Examples 1 to 8 were significantly higher than that in Comparative Example 1 (the maximum value was up to 10 times or more of that of the electrode plate in Comparative Example 1). It can be seen that, in the present invention, recessed portions and protruding portions are disposed on the current collector, and a functional layer is disposed in the recessed portions, so that electrical connection between the current collector and the active material layer is physically blocked through expansion of the functional layer at high temperature, thereby improving safety performance of the secondary battery.

In addition, by comparing Example 9 and Comparative Example 1 in Table 3, it can be seen that, when the surface roughness Ra of the current collector 11 was within the scope of the present invention, because a functional layer (barium titanate) was disposed in the recessed portions on the surface of the current collector, the electrode plate resistance in Example 9 was also significantly higher than that in Comparative Example 1 (the lift-to-drag ratio was about 2 times). It can be seen that, in the present invention, recessed portions and protruding portions are disposed on the current collector, and a functional layer is disposed in the recessed portions, so that electrical connection between the current collector and the active material layer is significantly reduced through characteristics of the PTC material at high temperature, thereby improving safety performance of the secondary battery.

Therefore, it can be seen from Table 2 and Table 3 that, the secondary battery using the electrode plate in the present invention has good capacity and power performance at room temperature, and also has excellent safety performance at high temperature.

It should be further noted that according to the disclosure and guidance in this specification, persons skilled in the art to which this application relates may also make appropriate changes and modifications to the foregoing embodiments. Therefore, this application is not limited to the specific embodiments disclosed and described above, and modifications and changes to this application also fall within the protection scope of the claims of this application. In addition, although some specific terms are used in this specification, these terms are used only for ease of description, and do not constitute any limitation on this application.

**Claims**

1. An electrode plate, **characterized in that**
   the electrode plate comprises:

   a current collector, wherein at least a portion of a surface of the current collector comprises a plurality of protruding portions and a plurality of recessed portions;
   a functional layer, wherein the functional layer is disposed in at least a portion of the plurality of recessed portions; and
   an active material layer, wherein the active material layer covers, by means of contact with the current collector and the functional layer, the current collector and the functional layer, wherein
   the functional layer comprises at least one of a polymer material and a PTC material.

2. The electrode plate according to claim 1, **characterized in that** the active material layer covers the protruding portions, without the functional layer covered, on the surface of the functional layer and the current collector.

3. The electrode plate according to claim 1 or 2, **characterized in that** a surface roughness Ra of the surface of the current collector is $\geq 1\ \mu m$, optionally $1.5\ \mu m$-$50\ \mu m$, and further optionally $1.5\ \mu m$-$30\ \mu m$ or $1.5\ \mu m$-$20\ \mu m$.

4. The electrode plate according to claim 3, **characterized in that** the surface roughness is 1.5 $\mu$m-10 $\mu$m, and optionally, $\mu$m 1.5 $\mu$m-6 $\mu$m.

5. The electrode plate according to any one of claims 1 to 4, **characterized in that** the polymer material and the PTC material are in a form of particles, and a median particle size by volume is 0.1 $\mu$m-10 $\mu$m, and optionally, 0.1 $\mu$m-2 $\mu$m.

6. The electrode plate according to any one of claims 1 to 5, **characterized in that**
   the polymer material comprises at least one of polyethylene, ethylene copolymer, polypropylene, polyvinylidene fluoride, polymethyl methacrylate, polystyrene, ethylene propylene rubber, cis-polybutadiene, polyamide, polyaniline, polyphenylene sulfide, copolymer of olefin monomer and acid anhydride monomer, or polycaprolactone, polylactide, polyvalerolactone and polyethylene oxide, polyethylene oxide, polypropylene oxide, and a blend of compounds of polytetramethylene oxide; and optionally, the polymer material comprises polyethylene, polyvinylidene fluoride, or polymethyl methacrylate.

7. The electrode plate according to any one of claims 1 to 6, **characterized in that**
   the PTC material comprises at least one of a bismuth titanate modified material, barium titanate, a barium titanate modified material, vanadium oxide, and a vanadium oxide modified material; and optionally, the PTC material comprises barium titanate.

8. The electrode plate according to any one of claims 1 to 7, **characterized in that**

   the functional layer comprises a conductive material;
   wherein the conductive material comprises at least one of a conductive metal material, a conductive metal oxide material, a conductive metal carbide material, a conductive polymer material, and a conductive carbon-based material; and optionally, the conductive material comprises one or more of conductive metal powder or metal oxide powder, tungsten carbide powder, carbon black, graphite fiber, carbon nanotube, graphene, and graphite sheet.

9. The electrode plate according to any one of claims 1 to 8, **characterized in that**
   the electrode plate is at least one of a positive electrode plate and a negative electrode plate.

10. The electrode plate according to any one of claims 1 to 9, **characterized in that**
    the active material layer comprises at least one of lithium transition metal oxide, olivine-structured lithium-containing phosphate, and respective modified compounds thereof; the lithium transition metal oxide comprises one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof; and the olivine-structured lithium-containing phosphate comprises one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and modified compounds thereof.

11. A secondary battery, **characterized in that** the secondary battery comprises the electrode plate according to any one of claims 1 to 10.

12. A battery module, **characterized in that** the battery module comprises the secondary battery according to claim 11.

13. A battery pack, **characterized in that** the battery pack comprises the battery module according to claim 12.

14. An electric apparatus, **characterized in that** the electric apparatus comprises at least one of the secondary battery according to claim 11, the battery module according to claim 12, or the battery pack according to claim 13.

FIG. 1

FIG. 2

| Common aluminum foil surface | Roughened aluminum foil surface |
| Common aluminum foil surface with a functional layer | Roughened aluminum foil surface with a functional layer |

FIG. 3

FIG. 4

FIG. 5

FIG. 6

FIG. 7

FIG. 8

FIG. 9

FIG. 10

## INTERNATIONAL SEARCH REPORT

| International application No. |
|---|
| **PCT/CN2021/130359** |

### A. CLASSIFICATION OF SUBJECT MATTER

H01M 4/78(2006.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, CNKI, WPI, EPODOC: 电池, 电极, 集电体, 集流体, 集电器, 功能层, 凸起, 凹陷, 不平, 锯齿, 波浪, 聚合物, 高分子, PTC, 铝箔, 粗糙, 喷砂, batter???, cell?, electrode?, current w collector?, concave, protrusion, saw, wave, polymer, macromolecule, foil, rough

### C. DOCUMENTS CONSIDERED TO BE RELEVANT

| Category* | Citation of document, with indication, where appropriate, of the relevant passages | Relevant to claim No. |
|---|---|---|
| PX | CN 113611872 A (NINGDE CONTEMPORARY AMPEREX TECHNOLOGY CO., LTD.) 05 November 2021 (2021-11-05)<br>     claims 1-10 | 1-14 |
| X | CN 110168794 A (LG CHEMICAL LTD.) 23 August 2019 (2019-08-23)<br>     description [0066]-[0103] and paragraphs [0191]-[0192], figures 1e and 2 | 1, 3-6, 9, 11-14 |
| A | EP 3367476 A1 (NISSAN MOTOR CO., LTD.) 29 August 2018 (2018-08-29)<br>     entire document | 1-14 |
| A | CN 111200131 A (NINGDE CONTEMPORARY AMPEREX TECHNOLOGY CO., LTD.) 26 May 2020 (2020-05-26)<br>     entire document | 1-14 |
| A | CN 104409681 A (SHANGHAI AEROSPACE POWER TECHNOLOGY CO., LTD.) 11 March 2015 (2015-03-11)<br>     entire document | 1-14 |
| A | CN 101436656 A (BYD COMPANY LTD.) 20 May 2009 (2009-05-20)<br>     entire document | 1-14 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 January 2022** | **10 February 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/130359**

| Patent document cited in search report | | | Publication date (day/month/year) | Patent family member(s) | | | Publication date (day/month/year) |
|---|---|---|---|---|---|---|---|
| CN | 113611872 | A | 05 November 2021 | None | | | |
| CN | 110168794 | A | 23 August 2019 | EP | 3567667 | A1 | 13 November 2019 |
| | | | | EP | 3567667 | A4 | 19 August 2020 |
| | | | | WO | 2019050346 | A1 | 14 March 2019 |
| | | | | JP | 2020508550 | A | 19 March 2020 |
| | | | | US | 2020006779 | A1 | 02 January 2020 |
| | | | | KR | 20190027767 | A | 15 March 2019 |
| | | | | KR | 102197880 | B1 | 04 January 2021 |
| | | | | JP | 2021166193 | A | 14 October 2021 |
| | | | | IN | 201917029693 | A | 13 March 2020 |
| EP | 3367476 | A1 | 29 August 2018 | EP | 3367476 | A4 | 31 October 2018 |
| | | | | EP | 3367476 | B1 | 16 December 2020 |
| | | | | CN | 108140802 | A | 08 June 2018 |
| | | | | KR | 20180057686 | A | 30 May 2018 |
| | | | | US | 2018316018 | A1 | 01 November 2018 |
| | | | | US | 10707493 | B2 | 07 July 2020 |
| | | | | WO | 2017068907 | A1 | 27 April 2017 |
| | | | | JP | 2017084507 | A | 18 May 2017 |
| | | | | JP | 6608668 | B2 | 20 November 2019 |
| | | | | IN | 201847015132 | A | 27 April 2018 |
| | | | | MY | 170974 | A | 23 September 2019 |
| | | | | CN | 108140802 | B | 09 March 2021 |
| CN | 111200131 | A | 26 May 2020 | US | 2021135238 | A1 | 06 May 2021 |
| | | | | EP | 3787070 | A1 | 03 March 2021 |
| | | | | EP | 3787070 | A4 | 21 July 2021 |
| | | | | WO | 2020098792 | A1 | 22 May 2020 |
| CN | 104409681 | A | 11 March 2015 | None | | | |
| CN | 101436656 | A | 20 May 2009 | CN | 101436656 | B | 06 October 2010 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011273374
- CN 202110873205
- WO 99811515 A
- WO 201320203851 A
- WO 201410661206 A
- WO 201510022749 A
- WO 201611208300 A
- WO 2016211863080 A
- WO 201710241644 A
- WO 201811297349 A
- WO 201910442726 A
- WO 201820838120 A
- GB 1031 T
- GB 19077 T